# EUROPEAN PATENT APPLICATION

(11) **EP 4 585 347 A1**
(43) Date of publication of application: **16.07.2025**
(21) Application number: 23912202.1
(22) Date of filing: 26.12.2023
(51) Int. Cl.: B23K 9/23, B23K 9/02, B23K 35/30, C22C 18/04, C22C 21/10, C23C 2/06

(54) **WELDED JOINT**

(30) Priority: 26.12.2022 JP 2022208668
(71) Applicant: NIPPON STEEL CORPORATION, Chiyoda-ku Tokyo 100-8071 (JP)
(72) Inventor: NISHIKADO, Minae, Tokyo 100-8071 (JP); MITSUNOBU, Takuya, Tokyo 100-8071 (JP); URANAKA, Masaaki, Tokyo 100-8071 (JP); MATSUBA, Masahiro, Tokyo 100-8071 (JP)
(74) Representative: Vossius & Partner Patentanwälte Rechtsanwälte mbB
(86) International application number: PCT/JP2023/046803
(87) International publication number: WO 2024/143424

(57) **Abstract**

To further improve corrosion resistance of a weld overlap portion in a welded joint formed by lap fillet welding using galvanized steel sheets as a material. The present invention relates to a welded joint including a first steel sheet and a second steel sheet connected to a weld bead zone with an extension direction set as a longitudinal direction in plan view, in a weld overlap portion, a joint gap is present, at least one surface of the first steel sheet and one surface of the second steel sheet, the one surfaces facing each other, each include a base iron and a plating layer on the base iron, and in a cross-sectional view cut in a direction perpendicular to the extension direction, the distance between an end of a region that is closest to the weld bead zone and where the thickness of the plating layer is less than 1 µm, the end that is farther from the weld bead zone, and a tip of the weld overlap portion in a direction perpendicular to the extension direction and the direction normal to the surface of the second steel sheet is 1000 µm or less.

## Description

### [Technical Field]

The present invention relates to a welded joint.

### [Background Art]

Automobile members such as automobile underbody members and various construction material members are often manufactured using welded joints made by welding a plurality of steel materials. These automobile members and construction material members are used while being exposed to various environments, and thus the welded joints manufactured are desired to have excellent corrosion resistance. Therefore, various types of zinc-based plated steel sheets, such as alloyed hot-dip galvanized steel sheets, are used as a material for such welded joints.

Here, the following unique problems arise when manufacturing a welded joint by welding galvanized steel sheets. There is a concern that the mechanical properties of the welded joint deteriorate due to blowholes formed as a result of evaporation of Zn in plating during welding in the vicinity of a "toe" defined in JIS Z3001 (2018). Furthermore, the evaporation of Zn in plating damages a sacrificial corrosion resistance layer, resulting in that the corrosion resistance also deteriorates.

To solve such a problem of blowhole formation as above, various proposals have been made in the past. For example, in Patent Document 1 below, there has been proposed a plated steel material including: a steel sheet; and a plating layer provided on a surface of the steel sheet and including a Zn-Al-Mg alloy layer, in which in a cross section of the Zn-Al-Mg alloy layer, an area fraction of an MnZn₂ phase is 45 to 75%, a total area fraction of an MgZn₂ phase and an Al phase is 70% or more, and an area fraction of a Zn-Al-MgZn₂ ternary eutectic structure is 0 to 5%, and the plating layer has a predetermined chemical composition.

### [Prior Art Document]

### [Patent Document]

Patent Document 1: Patent Document 1: International Publication Pamphlet No. WO 2018/139620

### [Disclosure of the Invention]

### [Problems to Be Solved by the Invention]

Here, the problem of the blowhole formation can be solved by using the plated steel material proposed in Patent Document 1 above. Here, as a result of earnest examination conducted by the present inventors, in a welded joint obtained by welding galvanized steel sheets, as a portion in which corrosion resistance is expected, in addition to the vicinity of such a toe as discussed in Patent Document 1 above, there is a portion in which the steel sheets are overlapped with each other in a welded joint obtained by lap fillet welding (to be also referred to as a weld overlap portion below).

Patent Document 1 described above has not mentioned the corrosion resistance in such a weld overlap portion as described above, and there is room for improvement in the corrosion resistance of the weld overlap portion in the welded joint obtained by lap fillet welding using the galvanized steel sheets as a material.

Thus, the present invention has been made in consideration of the above-described problem, and an object thereof is to provide a welded joint formed by lap fillet welding using galvanized steel sheets as a material, which is capable of further improving the corrosion resistance of a weld overlap portion.

### [Means for Solving the Problems]

To solve the above-described problem, the present inventors conducted earnest examination and then found out that it becomes possible to achieve a further improvement in the corrosion resistance of the weld overlap portion by controlling a present state of a plating layer in the weld overlap portion.

The gist of the present invention completed based on such findings is as follows.

(1) A welded joint, includes: a first steel sheet and a second steel sheet that are connected to a weld bead zone with an extension direction set as a longitudinal direction in plan view, in which the first steel sheet and the second steel sheet each have a heat-affected zone located around the weld bead zone and a non-heat-affected zone that is not affected by heat from welding, in a weld overlap portion, which is a portion where a surface of the first steel sheet and a surface of the second steel sheet face each other, a joint gap, which is a gap present between the first steel sheet and the second steel sheet, is present, at least one surface of the first steel sheet and one surface of the second steel sheet, the one surfaces facing each other, each include a base iron and a plating layer on the base iron, the plating layer is a plating layer having a chemical composition containing, in mass%, Al: 10.00 to 70.00%, Mg: 3.00 to 20.00%, and Fe: 0.01 to 15.00%, and selectively containing one or two or more elements selected from the group including an element group A, an element group B, an element group C, an element group D, an element group E, an element group F, and an element group G described below, with the balance including 5.00 mass% or more of Zn and impurities, when the weld overlap portion is viewed from the extension direction of the weld bead zone, a center axis of the joint gap is virtually extended toward the weld bead zone along a direction perpendicular to the extension direction, and an intersection point of the center axis with an end of the weld bead zone is defined as a tip of the weld overlap portion, and in a cross-sectional view cut in a direction perpendicular to the extension direction, the distance between an end of a region that is closest to the weld bead zone and where the thickness of the plating layer is less than 1 µm, the end that is farther from the weld bead zone, and the tip of the weld overlap portion in a direction perpendicular to the extension direction and the direction normal to the surface of the second steel sheet is 1000 µm or less.
   [Element group A]: One or two selected from the group including Si: greater than 0% and 10.00% or less, and Ca: greater than 0% and 4.00% or less
   [Element group B]: One or two or more selected from the group including Sb: greater than 0% and 0.5000% or less, Pb: greater than 0% and 0.5000% or less, and Sr: greater than 0% and 0.5000% or less
   [Element group C]: One or two or more selected from the group including Cu: greater than 0% and 1.0000% or less, Ti: greater than 0% and 1.0000% or less, Cr: greater than 0% and 1.0000% or less, Nb: greater than 0% and 1.0000% or less, Ni: greater than 0% and 1.0000% or less, Mn: greater than 0% and 1.0000% or less, Mo: greater than 0% and 1.0000% or less, Co: greater than 0% and 1.0000% or less, and V: greater than 0% and 1.0000% or less
   [Element group D]: One or two or more selected from the group including Sn: greater than 0% and 1.0000% or less, In: greater than 0% and 1.0000% or less, and Bi: greater than 0% and 1.0000% or less
   [Element group E]: One or two or more selected from the group including Zr: greater than 0% and 1.0000% or less, Ag: greater than 0% and 1.0000% or less, and Li: greater than 0% and 1.0000% or less
   [Element group F]: One or two or more selected from the group including La: greater than 0% and 0.5000% or less, Ce: greater than 0% and 0.5000% or less, and Y: greater than 0% and 0.5000% or less
   [Element group G]: B: greater than 0% and 0.5000% or less
(2) The welded joint according to (1), in which
   the plating layer has a chemical composition containing the element group A.
(3) The welded joint according to (1), in which
   the plating layer has a chemical composition containing the element group B.
(4) The welded joint according to (1), in which
   the plating layer has a chemical composition containing the element group C.
(5) The welded joint according to (1), in which
   the plating layer has a chemical composition containing the element group D.
(6) The welded joint according to (1), in which
   the plating layer has a chemical composition containing the element group E.
(7) The welded joint according to (1), in which
   the plating layer has a chemical composition containing the element group F.
(8) The welded joint according to (1), in which
   the plating layer has a chemical composition containing the element group G.
(9) The welded joint according to any one of (1) to (8), in which
   the plating layer contains Al: 18.00 to 50.00 mass%, Mg: 6.00 to 15.00 mass%, and as the element group A, Ca: 0.05 to 4.00 mass%.
(10) The welded joint according to any one of (1) to (8), in which
   regarding a C concentration calculated based on a depth profile of the distribution of carbon by glow discharge spectrometry in the base iron of the non-heat-affected zone, the depth at which the C concentration is 0.05 mass% or less is 10 µm or more from the interface between the base iron and the plating layer.
(11) The welded joint according to (9), in which
   regarding a C concentration calculated based on a depth profile of the distribution of carbon by glow discharge spectrometry in the base iron of the non-heat-affected zone, the depth at which the C concentration is 0.05 mass% or less is 10 µm or more from the interface between the base iron and the plating layer.
(12) The welded joint according to any one of (1) to (8), in which
   a tensile strength of at least one of the first steel sheet and the second steel sheet is 780 MPa or more.
(13) The welded joint according to (9), in which
   a tensile strength of at least one of the first steel sheet and the second steel sheet is 780 MPa or more.
(14) The welded joint according to (10), in which
   a tensile strength of at least one of the first steel sheet and the second steel sheet is 780 MPa or more.
(15) The welded joint according to (11), in which
   a tensile strength of at least one of the first steel sheet and the second steel sheet is 780 MPa or more.
(16) The welded joint according to (1), in which
   the distance is 500 µm or less.
(17) The welded joint according to (1), in which
   the distance is 100 µm or less.

### [Effect of the Invention]

As explained above, according to the present invention, it becomes possible to further improve the corrosion resistance of the weld overlap portion in the welded joint formed by lap fillet welding using the galvanized steel sheets as a material.

### [Brief Description of the Drawings]

[FIG. 1] FIG. 1 is an explanatory view schematically illustrating an example of a structure of a welded joint according to an embodiment of the present invention.
[FIG. 2] FIG. 2 is an explanatory view for explaining the welded joint according to the same embodiment.
[FIG. 3] FIG. 3 is an explanatory view for explaining a weld overlap portion in the welded joint according to the same embodiment.
[FIG. 4] FIG. 4 is an explanatory view for explaining the weld overlap portion in the welded joint according to the same embodiment.

### [Embodiments for Carrying out the Invention]

There will be explained a preferred embodiment of the present invention in detail with reference to the accompanying drawings below. Incidentally, in this description and the drawings, components having substantially the same functional configuration are denoted by the same reference numerals and symbols to omit duplicate explanations.

### (Regarding a welded joint)

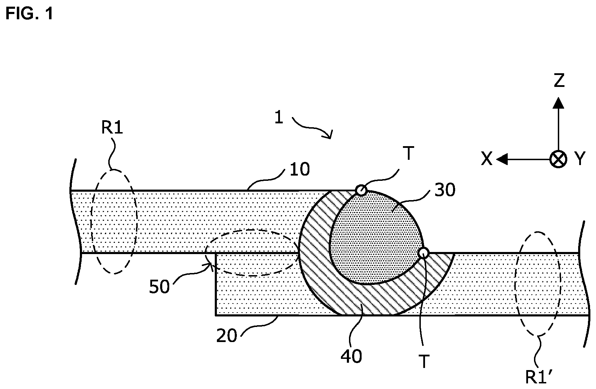

First, there is explained an overall configuration of a welded joint according to an embodiment of the present invention with reference to FIG. 1. FIG. 1 is an explanatory view schematically illustrating an example of a structure of the welded joint according to this embodiment.

Incidentally, for convenience, such a coordinate system as illustrated in FIG. 1 shall be used to make an explanation as appropriate below. FIG. 1 illustrates, as an example, a welded joint in which two steel sheets are welded by arc welding.

FIG. 1 schematically illustrates the overall configuration of a welded joint obtained by lap fillet welding a first steel sheet and a second steel sheet by arc welding or laser welding and illustrates a cross section of the welded joint vertical to an extension direction of a weld bead zone. As schematically illustrated in FIG. 1, a welded joint 1 according to this embodiment includes a first steel sheet 10, a second steel sheet 20, and a weld bead zone 30. Further, a heat-affected zone 40 is formed near the weld bead zone 30 in the first steel sheet 10 and the second steel sheet 20. As illustrated in FIG. 1, in the following, the direction normal to the surface of the second steel sheet 20 is set as the Z-axis direction, the extension direction of the weld bead zone 30 is set as the Y-axis direction, and the direction perpendicular to the Z-axis direction and the Y-axis direction is set as the X-axis direction.

Here, it is preferable to use a zinc-based plated steel sheet including such a plating layer as will be explained in detail below as the steel sheet (to be also referred to as a "material steel sheet" below) that serves as the material for the first steel sheet 10 and the second steel sheet 20 that constitute the welded joint 1. At this time, in such a material steel sheet, at least in the region where the surface of the material steel sheet on the side that becomes the first steel sheet 10 and the surface of the material steel sheet on the side that becomes the second steel sheet 20 face each other in the Z-axis direction, such a plating layer as will be explained in detail below is provided.

Further, the weld bead zone 30 is a portion formed by arc welding or laser welding, and interdiffusion of constituent elements occurs between a welding wire that is used as needed during welding and the material steel sheet. In FIG. 1, the joint interface between the weld bead zone 30 and the first steel sheet 10 or the second steel sheet 20 is illustrated as a smooth curve or straight line for convenience of illustration, but the actual joint interface has a complex curved surface due to oscillation of molten metal during welding caused by arc plasma or other factors. Further, the weld bead zone 30 extends along the Y-axis direction in the drawing, and the first steel sheet 10 and the second steel sheet 20 are joined by the weld bead zone 30.

Incidentally, the components forming the weld bead zone 30 change according to the type of the welding wire used, the chemical composition of the material steel sheet, or another factor, and thus it is difficult to unambiguously determine the components that cover all possibilities. However, in the case where the plating layer is present on the material steel sheet at an overlapped portion (lap) where two material steel sheets are overlapped, the weld bead zone 30 is generally composed mainly of oxides of "easily oxidizable elements" (the content of oxides of "easily oxidizable elements" is 50 mass% or more) among at least various elements forming the plating layer present at the overlapped portion. Examples of such easily oxidizable elements include Al, Mg, Si, and so on.

Further, when identifying the portion corresponding to the weld bead zone 30 in the welded joint 1 to which attention is paid, it can be easily visualized by etching the cross section of the welded joint 1 including the weld bead zone 30, the heat-affected zone 40, and a non-heat-affected zone using an etching solution. For example, as the etching solution, it is possible to use nital (mixture: 95% ethanol, 5% sulfuric acid), an etching solution obtained by mixing 60 g of sodium dodecylbenzenesulfonate, 36 g of picric acid, 60 cc of ethanol, and 60 cc of household detergent solution (for example, a common one such as dishwashing detergent) in 2400 cc of water, or the like.

Incidentally, the oxides formed during welding are broadly classified into two types: scale and slag. The scale, which is oxide formed on the surface of the weld bead zone 30 during welding, contains, in mass% excluding oxygen, 50% or more of Fe, with the balance including easily oxidizable elements and impurities. Further, the slag contains, in mass% excluding oxygen, 50% or more of easily oxidizable elements, with the balance including less than 50 mass% of Fe and impurities. Here, specific examples of the "easily oxidizable elements" include Ca, Mg, In, Bi, Cr, Zr, Li, La, Ce, Sr, Y, Si, Mn, Al, and Ti.

Incidentally, the above-described scale and slag can be easily distinguished by performing a component analysis using a scanning electron microscope (SEM) equipped with an electron probe micro analyzer (EPMA). More specifically, the cross section of a portion that appears to be scale or slag is subjected to point analysis by an EPMA, and a determination is made depending on which of the above-described "easily oxidizable elements" and Fe has a content of 50 mass% or more. When the content of Fe is 50 mass% or more, the portion to which attention is paid can be determined to be slag, and when the content of "easily oxidizable elements" is 50 mass% or more, the portion to which attention is paid can be determined to be scale.

Here, in JIS Z3001 (2018), the "point of intersection between a surface of a base iron and a surface of a weld bead is defined as a "toe." In the welded joint 1 as illustrated in FIG. 1, the point of intersection between the surface of the weld bead zone 30 and the surface of the base iron in the first steel sheet 10 or the second steel sheet 20 or the heat-affected zone corresponds to such a "toe." The welded joint 1 according to this embodiment focuses on the corrosion resistance in the vicinity of a toe T.

Further, heat input by arc welding or laser welding is generally performed from one side of the welded joint 1. On the heat input side of arc welding or laser welding, the weld bead zone 30 is exposed on the surface of the steel sheet serving as a base material, and the width of the weld bead becomes narrower as the heat input by welding propagates in the direction. Therefore, by paying attention to the presence or absence of the weld bead zone 30 exposed on the surface and the shape of the weld bead, it is possible to identify the direction of heat input during arc welding or laser welding. Incidentally, the above-described aspect in which the "weld bead zone 30 is exposed" includes an aspect in which the scale formed on the weld bead zone 30 is exposed.

Further, in this embodiment, it is also possible to regard the steel sheet located on such a heat input side of arc welding or laser welding as described above as the first steel sheet 10, and regard the steel sheet located on the side opposite to the heat input side of arc welding or laser welding as the second steel sheet 20.

As schematically illustrated in FIG. 1, the heat-affected zone 40 is formed around the weld bead zone 30. This heat-affected zone 40 is produced when the metal structure of the material steel sheet is altered as a result of heat input to the material steel sheet by arc welding or laser welding. The size of the heat-affected zone 40 depends on the amount of heat input during arc welding or laser welding, and generally, the greater the amount of heat input, the larger the range of the heat-affected zone 40 becomes. Further, the alteration of the metal structure of the material steel sheet makes it possible to identify the heat-affected zone 40 easily because the material steel sheet whose metal structure is altered is made different in appearance from the portion of the material steel sheet that has not been altered when visually inspected.

Further, in the welded joint 1 according to this embodiment, the region where the surface of the first steel sheet 10 and the surface of the second steel sheet 20 face each other in the Z-axis direction (more specifically, the portion other than the weld bead zone 30 and the heat-affected zone 40 of the region where the surface of the first steel sheet 10 and the surface of the second steel sheet 20 face each other) is referred to as a "weld overlap portion 50." This weld overlap portion 50 will be explained later.

### <Regarding the non-heat-affected zone>

There is then explained in detail a configuration of a portion of the welded joint 1 according to this embodiment, which is not heat-affected by welding.

In the following explanation, the portion of the welded joint 1, which is not heat-affected by welding, (in other words, the portion other than the weld bead zone 30 and the heat-affected zone 40) is referred to as a "non-heat-affected zone." In the welded joint 1 as illustrated in FIG. 1, it can be considered that the non-heat-affected zone is present in a direction perpendicular to the extension direction of the weld bead zone 30 (the Y-axis direction in FIG. 1) starting from the toe T and away from the weld bead zone 30 (the X-axis direction in FIG. 1). For example, regions R1 and R1' surrounded by the dashed lines in FIG. 1 each are located at a position spaced apart to a certain extent from the weld bead zone 30 (for example, at a position spaced apart by 5 mm or more from the toe T toward the opposite side of the weld bead zone 30 in the X-axis direction), and therefore can clearly be considered as the non-heat-affected zone.

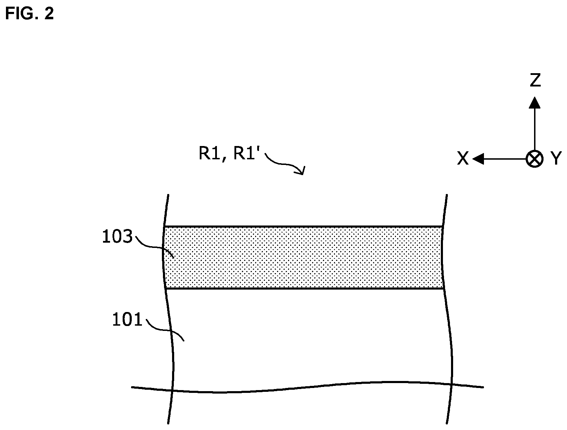

FIG. 2 is a view schematically illustrating a portion of a cross section parallel to the sheet thickness direction in the non-heat-affected zone R1 or R1'. As schematically illustrated in FIG. 2, the non-heat-affected zone R1 or R1' in at least either the first steel sheet 10 or the second steel sheet 20 includes a base iron 101 and a plating layer 103 located on at least a portion of the surface of the base iron 101. Incidentally, in the non-heat-affected zone R1 of the welded joint 1 according to this embodiment, the plating layer 103 is present on both surfaces of the base iron 101.

The base iron 101 and the plating layer 103 included in the non-heat-affected zone will be explained in detail below.

### <<Regarding the base iron 101>>

In the welded joint 1 according to this embodiment, the dimensions, components, structure, and mechanical properties of the base iron 101 corresponding to the base of the material steel sheet are not limited in particular. For example, various steel sheets can be used as the base iron 101 according to a mechanical strength (for example, a tensile strength) or the like required for the welded joint 1. Examples of such steel sheets include various types of Al-killed steels, ultralow carbon steels containing Ti, Nb, and so on, high-strength steels in which ultralow carbon steel further contains strengthening elements such as P, Si, and Mn, various steel sheets containing various other components (Cr, N, Cu, B, Ni, Mg, Ca, V, Co, Zn, As, Y, Zr, Mo, Sn, Sb, Ta, W, Pb, Bi, REM, and so on), and so on.

Among such high-strength steels as described above, for example, the use of high-strength steel having a tensile strength of 780 MPa or more (so-called high-strength steel of 780 MPa class or more) is preferred because it becomes possible to further improve robustness of the welded joint 1. Here, the tensile strength of the base iron 101 can be measured by a well-known method. As an example, from a portion corresponding to the base iron 101 of the non-heat-affected zone of the welded joint 1 whose tensile strength is to be measured, one of the test pieces defined in JIS Z 2241

(2011) only needs to be fabricated to have a size that can be taken from the welded joint 1, and the tensile strength of the obtained test piece only needs to be measured by the method defined in JIS Z 2241 (2011).

Further, the thickness of the base iron 101 is not limited in particular, and is set as appropriate according to the mechanical strength or the like required for the welded joint 1.

### <<Regarding the plating layer 103>>

The plating layer 103 is provided on the base iron 101 in the non-heat-affected zone, for example, as schematically illustrated in FIG. 2. The plating layer 103 is derived from a plating layer included in the plated steel sheet serving as the material for the welded joint 1.

First, there will be explained in detail a chemical composition of the plating layer 103 below.

### ◊ Regarding the chemical composition of the plating layer 103

According to one aspect, as the chemical composition, the plating layer 103 according to this embodiment has a chemical composition containing, in mass%, Al: 10.00 to 70.00%, Mg: 3.00 to 20.00%, and Fe: 0.01 to 15.00% with the balance including 5.0000 mass% or more of Zn and impurities. In other words, in the chemical composition of the plating layer 103 according to this embodiment, the contents of Al, Mg, and Fe are within the above-described ranges and the total of these contents is 95.0000 mass% or less, with the balance including 5.0000 mass% or more of Zn and impurities.

Further, according to another aspect, as the chemical composition, the plating layer 103 according to this embodiment has a chemical composition containing, in mass%, Al: 10.00 to 70.00%, Mg: 3.00 to 20.00%, and Fe: 0.01 to 15.0000%, and further containing one or two or more elements selected from the group including an element group A, an element group B, an element group C, an element group D, an element group E, an element group F, and an element group G described below, with the balance including 5.0000 mass% or more of Zn and impurities. In other words, in the chemical composition of the plating layer 103 according to this embodiment, the contents of Al, Mg, and Fe are within the above-described ranges and the total of the contents of Al, Mg, and Fe and the element group A to the element group G is 95.0000 mass% or less, with the balance including 5.00 mass% or more of Zn and impurities.

[Element group A]: One or two selected from the group including Si: greater than 0% and 10.00% or less, and Ca: greater than 0% and 4.00% or less [Element group B]: One or two or more selected from the group including Sb: greater than 0% and 0.5000% or less, Pb: greater than 0% and 0.5000% or less, and Sr: greater than 0% and 0.5000% or less
[Element group C]: One or two or more selected from the group including Cu: greater than 0% and 1.0000% or less, Ti: greater than 0% and 1.0000% or less, Cr: greater than 0% and 1.0000% or less, Nb: greater than 0% and 1.0000% or less, Ni: greater than 0% and 1.0000% or less, Mn: greater than 0% and 1.0000% or less, Mo: greater than 0% and 1.0000% or less, Co: greater than 0% and 1.0000% or less, and V: greater than 0% and 1.0000% or less
[Element group D]: One or two or more selected from the group including Sn: greater than 0% and 1.0000% or less, In: greater than 0% and 1.0000% or less, and Bi: greater than 0% and 1.0000% or less
[Element group E]: One or two or more selected from the group including Zr: greater than 0% and 1.0000% or less, Ag: greater than 0% and 1.0000% or less, and Li: greater than 0% and 1.0000% or less
[Element group F]: One or two or more selected from the group including La: greater than 0% and 0.5000% or less, Ce: greater than 0% and 0.5000% or less, and Y: greater than 0% and 0.5000% or less
[Element group G]: B: greater than 0% and 0.5000% or less

As above, the plating layer 103 according to this embodiment is a plating layer having a chemical composition containing, in mass%, Al: 10.00 to 70.00%, Mg: 3.00 to 20.00%, and Fe: 0.01 to 15.00%, and selectively containing one or two or more elements selected from the group including the element group A, the element group B, the element group C, the element group D, the element group E, the element group F, and the element group G, with the balance including 5.0000 mass% or more of Zn and impurities.

### [Al: 10.00 to 70.00 mass%]

Al is an element necessary for constituting the main metal structure (Zn-Al-Mg-based metal structure) of the plating layer 103 according to this embodiment, and a certain amount or more of Al is contained in order to ensure corrosion resistance of the portion that becomes the heat-affected zone and corrosion resistance of the portion that becomes the non-heat-affected zone as the plated steel sheet. When the content of Al in the plating layer 103 is less than 10.00 mass%, the corrosion resistances of such portions to be the heat-affected zone and the non-heat-affected zone as described above cannot be ensured. This is because an insufficient content of Al makes it impossible to control an alloying reaction between the plating layer and the base iron during welding, resulting in that the amount of η-Zn phase, which corrodes easily, formed increases. Therefore, in the plating layer 103 according to this embodiment, the content of Al is 10.00 mass% or more. The content of Al is preferably 18.00 mass% or more, and more preferably 30.00 mass% or more. The content of Al falls within such a range as described above, thereby making it possible to ensure the corrosion resistance as the plated steel sheet.

On the other hand, when the content of Al in the plating layer 103 is greater than 70.00 mass%, an Al phase, which functions as a cathode when placed in a corrosive environment, increases excessively, and thereby, the amount of Mg-Zn phase, which is excellent in corrosion resistance, formed decreases relatively, to thereby reduce a sacrificial anti-corrosion property and make the base iron more susceptible to corrosion, failing to ensure the corrosion resistance as the plated steel sheet. Therefore, in the plating layer 103 according to this embodiment, the content of Al is 70.00 mass% or less. The content of Al is preferably 50.00 mass% or less, and more preferably 48.00 mass% or less.

### [Mg: 3.00 to 20.00 mass%]

Mg is an element that improves corrosion resistance and is also an element necessary for constituting the main metal structure (Zn-Al-Mg-based metal structure) of the plating layer 103 according to this embodiment, and a certain amount or more of Mg is contained in order to ensure corrosion resistance of the portion that becomes the heat-affected zone and corrosion resistance of the portion that becomes the non-heat-affected zone as the plated steel sheet. Therefore, for obtaining sufficient corrosion resistance even at the weld zone, the content of Mg is 3.00 mass% or more in the plating layer 103 according to this embodiment. The content of Mg is preferably 6.00 mass% or more, and more preferably 9.00 mass% or more. The content of Mg falls within such a range as described above, thereby making it possible to ensure the corrosion resistance as the plated steel sheet.

On the other hand, when the content of Mg in the plating layer 103 is greater than 20.00 mass%, anodic dissolution of the plating layer is likely to proceed when placed in a corrosive environment, thus failing to ensure the corrosion resistance as the plated steel sheet. Therefore, the content of Mg is 20.00 mass% or less in the plating layer 103 according to this embodiment. The content of Mg is preferably 15.00 mass% or less, and more preferably 13.00 mass% or less. The content of Mg falls within such a range as described above, thereby making it possible to ensure the corrosion resistance as the plated steel sheet.

### [Fe: 0.01 to 15.00 mass%]

Elements constituting the steel sheet are sometimes included in the plating layer 103 from the base iron 101 serving as a base. Particularly, in the hot-dip galvanizing method, the elements constituting the base iron 101 are easily included in the plating layer 103 due to interdiffusion of the elements by a solid-liquid reaction between the base iron 101 and the plating layer 103. Due to such inclusion of the elements, a certain amount of Fe is contained in the plating layer 103, and the content is generally 0.01 mass% or more. When the above-described interdiffusion is promoted, adhesiveness between the base iron 101 and the plating layer 103 is improved. From the viewpoint of improving adhesiveness between the base iron 101 and the plating layer 103, the content of Fe in the plating layer 103 is preferably 0.20 mass % or more.

Further, Fe may be intentionally added to a plating bath used in manufacturing the plating layer 103 to the extent that the effect of the present invention is not impaired. However, when the content of Fe in the plating bath is increased, high-melting point intermetallic compounds of Fe and Al are formed in the plating bath, and such high-melting point intermetallic compounds tend to adhere to the plating layer 103 as dross to significantly reduce the appearance quality, which is not preferable. From such a viewpoint, the content of Fe in the plating bath is adjusted, and thereby the content of Fe in the plating layer 103 is 15.00 mass% or less. The content of Fe in the plating layer 103 is more preferably 10.00 mass% or less.

In the plating layer 103, the balance other than Al, Mg, and Fe described above is 5.0000 mass% or more of Zn and impurities.

Zn is an element necessary for constituting the main metal structure (Zn-Al-Mg-based metal structure) of the plating layer 103 according to this embodiment and is an important element for improving the corrosion resistance of the plated steel sheet. Further, the plating layer 103 contains Al, Mg, and Fe described above within the above-described ranges and further contains 5.00 mass% or more of Zn, thereby making it possible to ensure the corrosion resistance required for the plated steel sheet.

Then, there are explained in detail the element group A to the element group E that can be selectively contained in the chemical composition of the plating layer 103 according to another aspect of this embodiment.

Incidentally, when at least any of the elements belonging to the following element group B to element group E is contained in the plating layer 103 according to this embodiment, it is preferable that at least any of the elements belonging to the following element group B to element group E should be contained within the following content range to achieve a total content of 5.0000 mass% or less.

The total content of the elements belonging to the element group B to element group E is set to 5.0000 mass% or less, thereby making it possible to enjoy the effects exhibited by the addition of such respective elements as will be explained in detail below, without mutual impairment. The total content of the elements belonging to the element group B to element group E is preferably 1.00 mass% or less, and more preferably 0.2000 mass% or less.

Further, in another aspect of the plating layer 103 according to this embodiment, it is more preferable that the plating layer 103 should have a chemical composition containing 9.00 mass% or more and 15.00 mass% or less of Mg, and 0.05 mass% or more and 4.00 mass% or less of Ca as the element group A. The plating layer 103 has such a chemical composition, thereby making it possible to exhibit more excellent corrosion resistance.

### ◊ Element group A

In another aspect of the plating layer 103 according to this embodiment, the element group A that can be contained in the plating layer 103 is explained. At least any of the elements in the element group A described below is an element that can be contained in the plating layer 103 in place of part of Zn being the balance.
[Element group A]: One or two selected from the group including Si: greater than 0% and 10.00% or less, and Ca: greater than 0% and 4.00% or less

### [Si: 0 to 10.00 mass%]

It is also possible that the plating layer 103 according to this embodiment does not contain Si, and thus, the lower limit of the content of Si is 0 mass%. On the other hand, Si is an element that is capable of inhibiting excessive growth of the Fe-Al-based metal structure to be formed at the interface between the plating layer 103 and the base iron 101 and further improving the adhesiveness between the plating layer and the base iron. When Si is contained in the plating layer 103, the content of Si is preferably 0.05 mass% or more, and more preferably 0.20 mass% or more for inhibiting excessive growth of the Fe-Al-based metal structure.

On the other hand, when the content of Si exceeds 10.00 mass%, Si may form high-melting point intermetallic compounds with Mg excessively to inhibit the formation of Al-Mg oxide having an effect of inhibiting Zn evaporation, and therefore, it becomes difficult to inhibit the Zn evaporation when such plated steel sheets are welded. Therefore, it is preferable that the content of Si in the plating layer 103 should be 10.00 mass% or less. Further, when the content of Si in the plating bath, which is intended for manufacturing the plating layer 103, is too large, the viscosity of the plating bath may increase more than necessary and the operability when manufacturing the plated steel sheet (to be referred to as "plating operability" below) may decrease. Therefore, from the viewpoint of plating operability, the content of Si in the plating bath is adjusted, and thereby the content of Si in the plating layer 103 is preferably 5.00 mass% or less, and more preferably 2.00 mass% or less.

### [Ca: 0 to 4.00 mass%]

It is also possible that the plating layer 103 according to this embodiment does not contain Ca, and thus, the lower limit of the content of Ca is 0 mass%. On the other hand, when contained in the plating layer 103, Ca forms intermetallic compounds with Al and Zn. Further, when Si is contained in the plating layer 103 together with Ca, Ca forms intermetallic compounds with Si. These intermetallic compounds have a high melting point and a stable structure, thus making it possible to further inhibit liquid metal embrittlement (LME) during welding of the plated steel sheets. When Ca is contained in the plating layer 103, such an effect of inhibiting LME during welding is exhibited by setting the content of Ca to 0.01 mass% or more. The content of Ca in the plating layer 103 is more preferably 0.05 mass% or more.

On the other hand, when the content of Ca in the plating layer 103 exceeds 4.00 mass%, the corrosion resistance of the plated steel sheet may decrease. From such a viewpoint, the content of Ca in the plating layer 103 is 4.00 mass% or less. The content of Ca in the plating layer 103 is preferably 2.50 mass% or less, and more preferably 1.50 mass% or less.

### ◊ Element group B

Then, in another aspect of the plating layer 103 according to this embodiment, the element group B that can be contained in the plating layer 103 is explained. At least any of the elements in the element group B described below is an element that can be contained in the plating layer 103 in place of part of Zn being the balance.
[Element group B]: One or two or more selected from the group including Sb: greater than 0% and 0.5000% or less, Pb: greater than 0% and 0.5000% or less, and Sr: greater than 0% and 0.5000% or less

[Sb: 0 to 0.5000 mass%]
[Pb: 0 to 0.5000 mass%]
[Sr: 0 to 0.5000 mass%]

It is also possible that the plating layer 103 according to this embodiment does not contain Sb, Pb, or Sr, and thus the lower limit of the content of each of these elements is 0 mass%. On the other hand, when at least any of Sb, Pb, and Sr is contained in the plating layer 103, spangles are formed on the surface of the plating layer 103, thereby making it possible to improve metallic luster. Therefore, from the viewpoint of improving design of the plated steel sheet, at least any of Sb, Pb, and Sr is preferably contained in the plating layer 103. Such an effect of improving design is exhibited when the content of at least any of Sb, Pb, and Sr is 0.0500 mass% or more. Therefore, when at least any of Sb, Pb, and Sr is contained in the plating layer 103, the content of each of these elements is preferably 0.0500 mass% or more independently.

On the other hand, when forming the plating layer 103 in which any of the contents of Sb, Pb, and Sr exceeds 0.5000 mass%, an amount of dross generated in the plating bath, which is used for forming the plating layer 103, increases, failing to manufacture a plated steel sheet having good plating properties. Therefore, the content of each of Sb, Pb, and Sr in the plating layer 103 is 0.5000 mass% or less independently. The content of each of Sb, Pb, and Sr is preferably 0.2000 mass% or less independently.

### ◊ Element group C

Then, in another aspect of the plating layer 103 according to this embodiment, the element group C that can be contained in the plating layer 103 is explained. At least any of the elements in the element group C described below is an element that can be contained in the plating layer 103 in place of part of Zn being the balance.
[Element group C]: One or two or more selected from the group including Cu: greater than 0% and 1.0000% or less, Ti: greater than 0% and 1.0000% or less, Cr: greater than 0% and 1.0000% or less, Nb: greater than 0% and 1.0000% or less, Ni: greater than 0% and 1.0000% or less, Mn: greater than 0% and 1.0000% or less, Mo: greater than 0% and 1.0000% or less, Co: greater than 0% and 1.0000% or less, and V: greater than 0% and 1.0000% or less

[Cu: 0 to 1.0000 mass%]
[Ti: 0 to 1.0000 mass%]
[Cr: 0 to 1.0000 mass%]
[Nb: 0 to 1.0000 mass%]
[Ni: 0 to 1.0000 mass%]
[Mn: 0 to 1.0000 mass%]
[Co: 0 to 1.0000 mass%]
[V: 0 to 1.0000 mass%]

It is also possible that the plating layer 103 according to this embodiment does not contain Cu, Ti, Cr, Nb, Ni, Mn, Co, or V, and thus the lower limit of the content of each of these elements is 0 mass%. On the other hand, when at least any of Cu, Ti, Cr, Nb, Ni, Mn, Co, and V is contained in the plating layer 103, when such plated steel sheets are welded, these elements are incorporated into the Fe-Al-based metal structure produced by welding, making it possible to further improve corrosion resistance of the weld zone to be formed. Such an effect of improving corrosion resistance of the weld zone is exhibited when the content of at least any of Cu, Ti, Cr, Nb, Ni, Mn, Co, and V in the plating layer 103 is 0.0050 mass% or more. Therefore, when at least any of Cu, Ti, Cr, Nb, Ni, Mn, Co, and V is contained in the plating layer 103, the content of each of these elements is preferably set to 0.0050 mass% or more independently.

On the other hand, when forming the plating layer 103 in which any of the contents of Cu, Ti, Cr, Nb, Ni, Mn, Co, and V exceeds 1.0000 mass%, these elements form various intermetallic compounds in the plating bath, which is intended for forming the plating layer 103, causing an increase in the viscosity of the plating bath to fail to manufacture a plated steel sheet having good plating properties. Therefore, the content of each of Cu, Ti, Cr, Nb, Ni, Mn, Co, and V in the plating layer 103 is 1.0000 mass% or less independently. The content of each of Cu, Ti, Cr, Nb, Ni, Mn, Co, and V is preferably 0.20 mass% or less independently.

### [Mo: 0 to 1.0000 mass%]

It is also possible that the plating layer 103 according to this embodiment does not contain Mo, and thus the lower limit of the content of Mo is 0 mass%. On the other hand, when Mo is contained in the plating layer 103, it becomes possible to improve corrosion resistance. Such an effect of improving corrosion resistance is exhibited when the content of Mo is 0.0100 mass% or more. Therefore, when Mo is contained, the content is preferably set to 0.0100 mass% or more.

On the other hand, the case of forming the plating layer 103 in which the content of Mo exceeds 1.0000 mass% is not preferable because it causes a large amount of dross to be generated in the plating bath used. Therefore, the content of Mo is 1.0000 mass% or less. The content of Mo is preferably 0.0500 mass% or less.

### ◊ Element group D

Then, in another aspect of the plating layer 103 according to this embodiment, the element group D that can be contained in the plating layer 103 is explained. The elements in the element group D described below are elements that can be contained in the plating layer 103 in place of part of Zn being the balance.
[Element group D]: One or two or more selected from the group including Sn: greater than 0% and 1.0000% or less, In: greater than 0% and 1.0000% or less, and Bi: greater than 0% and 1.0000% or less

[Sn: 0 to 1.0000 mass%]
[In: 0 to 1.0000 mass%]
[Bi: 0 to 1.0000 mass%]

It is also possible that the plating layer 103 according to this embodiment does not contain Sn, In, or Bi, and thus the lower limit of the content of each of these elements is 0 mass%. Sn, In, and Bi are elements that increase a dissolution rate of Mg when the plating layer 103 is placed in a corrosive environment. When the dissolution rate of Mg increases, Mg ions are supplied to exposed portions of the base iron 101, improving corrosion resistance. From such a viewpoint, when Sn, In, and Bi are contained, the content of each of Sn, In, and Bi is preferably set to 0.0050 mass% or more independently.

On the other hand, excessive addition of Sn, In, and Bi may excessively accelerate the dissolution rate of Mg, and the corrosion resistance of the plated steel sheet may decrease. Such an increase in the dissolution rate of Mg becomes pronounced when the content of each of Sn, In, and Bi exceeds 1.0000 mass%, and thus the content of each of Sn, In, and Bi is 1.0000 mass% or less independently. The content of each of Sn, In, and Bi is preferably 0.2000 mass% or less independently.

### ◊ Element group E

Then, in another aspect of the plating layer 103 according to this embodiment, the element group E that can be contained in the plating layer 103 is explained. At least any of the elements in the element group E described below is an element that can be contained in the plating layer 103 in place of part of Zn being the balance.
[Element group E]: One or two or more selected from the group including Zr: greater than 0% and 1.0000% or less, Ag: greater than 0% and 1.0000% or less, and Li: greater than 0% and 1.0000% or less

[Zr: 0 to 1.0000 mass%]
[Ag: 0 to 1.0000 mass%]
[Li: 0 to 1.0000 mass%]

It is also possible that the plating layer 103 according to this embodiment does not contain Zr, Ag, or Li, and thus the lower limit of the content of each of these elements is 0 mass%. On the other hand, when at least any of Zr, Ag, and Li is contained in the plating layer 103, it becomes possible to further improve plating operability. Such an effect of improving plating operability is exhibited when the content of at least any of Zr, Ag, and Li is 0.0100 mass% or more. Therefore, when at least any of Zr, Ag, and Li is contained, the content of each of these elements is preferably set to 0.0100 mass% or more, independently.

On the other hand, when forming the plating layer 103 in which any of the contents of Zr, Ag, and Li exceeds 1.0000 mass%, a large amount of dross is likely to be generated in the plating bath used for forming the plating layer 103. Therefore, the content of at least any of Zr, Ag, and Li is 1.0000 mass% or less independently. The content of at least any of Zr, Ag, and Li is preferably 0.1000 mass% or less independently.

### ◊ Element group F

Then, in another aspect of the plating layer 103 according to this embodiment, the element group F that can be contained in the plating layer 103 is explained. At least any of the elements in the element group F described below is an element that can be contained in the plating layer 103 in place of part of Zn being the balance.
[Element group F]: One or two or more selected from the group including La: greater than 0% and 0.5000% or less, Ce: greater than 0% and 0.5000% or less, and Y: greater than 0% and 0.5000% or less

[La: 0 to 0.5000 mass%]
[Ce: 0 to 0.5000 mass%]
[Y: 0 to 0.5000 mass%]

It is also possible that the plating layer 103 according to this embodiment does not contain La, Ce, or Y, and thus the lower limit of the content of each of these elements is 0 mass%. On the other hand, La, Ce, and Y are elements that exhibit almost the same effect as Ca, further inhibiting the formation of blowholes during welding. This is because the atomic radius of each element is close to that of Ca. When these elements are contained in the plating layer 103, they substitute for Ca. Therefore, these elements are detected at the same position as Ca in EDS (Energy Dispersive X-ray Spectroscopy).

Such an effect of inhibiting blowhole formation during welding is exhibited when the content of each of these elements is set to 0.0100 mass% or more independently. Therefore, when at least any of Zr, Ag, and Li is contained, the content of each of these elements is preferably set to 0.0100 mass% or more independently. The content of each of La, Ce, and Y in the plating layer 103 is more preferably 0.0500 mass% or more independently.

On the other hand, when the contents of La, Ce, and Y are too large in the plating bath intended for manufacturing the plating layer 103, the viscosity of the plating bath may increase more than necessary and the plating operability may decrease. Therefore, from the viewpoint of plating operability, the contents of La, Ce, and Y in the plating bath are adjusted, and thereby the contents of La, Ce, and Y are each 0.5000 mass% or less independently. The content of each of La, Ce, and Y is preferably 0.1000 mass% or less independently.

### ◊ Element group G

Then, in another aspect of the plating layer 103 according to this embodiment, the element group G that can be contained in the plating layer 103 is explained. The element in the element group G described below is an element that can be contained in the plating layer 103 in place of part of Zn being the balance.
[Element group G]: B: greater than 0% and 0.5000% or less

### [B: 0 to 0.5000 mass%]

It is also possible that the plating layer 103 according to this embodiment does not contain B, and thus, the lower limit of the content is 0 mass%. When B is contained in the plating layer 103, the effect of inhibiting LME is obtained. This is presumably because when B is contained in the plating layer 103, it compounds with at least any of Zn, Al, Mg, and Ca to form various intermetallic compounds. Further, it is thought that with the presence of B in the plating layer 103, B diffuses from the plating layer 103 into the base iron 101, which is effective in inhibiting LME of the base iron 101 by strengthening grain boundaries. Further, the various intermetallic compounds formed with B have extremely high melting points, and therefore also act to inhibit evaporation of Zn during welding presumably. These improvement effects are exhibited by containing 0.0500 mass% or more of B. Therefore, when B is contained, the content of B is preferably 0.0500 mass% or more.

On the other hand, when B is excessively contained in the plating bath in order to contain B in the plating layer 103, a rapid increase in the melting point of plating is caused and the plating operability decreases, failing to manufacture a plated steel sheet having excellent plating properties. Such a decrease in the plating operability becomes pronounced when the content of B exceeds 0.5000 mass%, and thus the content of B is 0.5000 mass% or less. The content of B is preferably 0.1000 mass% or less.

### [Measurement method of chemical components]

The chemical components of the above-described plating layer 103 can be measured using ICP-AES (Inductively Coupled Plasma Atomic Emission Spectrometry) or ICP-MS (Inductively Coupled Plasma Mass Spectrometry). Incidentally, ICP-AES is used when analyzing chemical components down to 0.1 mass% units, and ICP-MS is used when analyzing chemical components in trace amounts of less than 0.1 mass%. A sample cut out from the non-heat-affected zone of the welded joint 1 is immersed in a 10% HCl aqueous solution with an inhibitor added thereto for about 1 minute to peel off the plating layer portion, and a solution is prepared in which the plating layer has been dissolved. The obtained solution is analyzed by ICP-AES or ICP-MS, thereby making it possible to obtain chemical components as an overall average of the plating layer.

### ◊ Regarding the coating weight of the plating layer 103

Although the coating weight of the plating layer 103 as explained above is not defined in particular, for example, it is preferably about 15 to 250 g/m² per one side of the base iron 101. When the coating weight of the plating layer 103 is within such a range as described above, the plating layer 103 according to this embodiment can exhibit sufficient corrosion resistance. The thickness of the plating layer 103 having such a coating weight is about 5 to 40 µm.

Incidentally, such a coating weight of the plating layer 103 is measured as described below. First, a sample is cut out from the non-heat-affected zone of the welded joint 1 into a size of 30 mm × 30 mm in plan view, and the mass of the sample is measured beforehand. Incidentally, it is designed that when cutting out the sample, the entire sample in the thickness direction is cut out. A tape seal is applied to one surface of the sample to prevent the plating layer on the one surface from dissolving in the next step. This sample is then immersed in a 10% HCl aqueous solution with an inhibitor added thereto, to peel off the plating layer 103 by pickling, and the mass of the sample after pickling is measured. From variations in the mass of the sample before and after pickling, the coating weight of the plating layer 103 per one side can be determined.

### ◊ Regarding the metal structure of the plating layer 103

Then, the metal structure of the plating layer 103 having the above-explained chemical composition is explained.

The plating layer 103 according to this embodiment has the above-described chemical composition, and further is formed through a manufacturing method to be explained in detail below, and thereby contains metal structures such as an Fe₂Al₅ phase, an Fe₄Al₃ phase, an FeAl phase, a ηZn phase, an α phase, an MgZn₂ phase, an Mg₂Zn₃ phase, an MgZn phase, and an Mg phase. Further, depending on the elements that can be further contained in the plating layer 103, the plating layer 103 can contain, in addition to such metal structures as described above, metal structures such as an Al-Si-Ca phase, an Al-Si-Ca-Fe phase, an Mg₂Si phase, and an Mg₂Sn phase. Having such metal structures as described above, the plating layer 103 according to this embodiment exhibits properties of inhibiting the occurrence of LME and having excellent corrosion resistance.

Here, the type of metal structure of the plating layer 103 according to this embodiment can be identified by observing a cross section of the plating layer 103 with an SEM. That is, the solidified structure of the plating layer 103 is observed with an SEM, and the type of metal structure of the plating layer 103 can be identified from the results of point analysis by an SEM-EPMA in an observation field of view.

More specifically, the observation position is set within the non-heat-affected zone at the rear surface side, and the size of the region to be observed is set to 40 µm × 40 µm. Such a range is observed at a magnification of 2000 times with an acceleration voltage of 15.0 kV, an irradiation current of 5.0 × 10⁻⁷ A, and an irradiation time of 50 milliseconds. After acquiring a backscattered electron image of the target range under such conditions, a point analysis of each metal structure is performed at three points using the contrast of the backscattered electron image. Such measurements only need to be performed for any five fields of view.

### ◊ Regarding the concentration of carbon (C) in a surface layer portion of the base iron in the non-heat-affected zone

Further, the non-heat-affected zone of the welded joint 1 according to this embodiment is measured by glow discharge optical emission spectrometry (GDS) in the depth direction (the thickness direction of the base iron 101) starting from the surface of the plating layer 103, and a depth profile relating to the distributions of Zn, Fe, and C is measured.

Incidentally, such measurements by GDS can be performed using a commercially available glow discharge optical emission spectrometer under the following conditions.

### ◊ Commercially available glow discharge optical emission spectrometer (for example, GDS850A manufactured by LECO Japan Co., Ltd., or the like)

- Ar gas pressure: 0.27 MPa
- Anode diameter: 4 mmϕ
- RF (radio frequency) output: 30 W

In the obtained measurement results, first, the position of the interface between the plating layer 103 and the base iron 101 is defined. More specifically, in the obtained depth profile relating to the distributions of Zn and Fe, the depth at which the curve indicating the intensity of Zn and the curve indicating the intensity of Fe intersect is set as the interface between the plating layer 103 and the base iron 101. Then, in the depth profile of the distribution of C, the shift of the C concentration in the depth direction is confirmed starting from the position of such an interface between the plating layer 103 and the base iron 101 as described above. The C concentration to which attention is paid below can be said to be the C concentration in the portion of the base iron 101 adjacent to the interface with the plating layer 103.

In the non-heat-affected zone of the welded joint 1 according to this embodiment, the depth at which the C concentration is 0.05 mass% or less is preferably 10 µm or more from the interface between the plating layer 103 and the base iron 101. C in steel is an element that promotes LME. Therefore, by reducing the C concentration in the portion of the interface between the base iron 101 and the plating layer 103, which is the starting point where LME cracking occurs, LME during welding can further be inhibited to further improve LME resistance. The depth at which the C concentration is 0.05 mass% or less is more preferably 15 µm or more. On the other hand, the upper limit of the depth at which the C concentration is 0.05 mass% or less is not limited in particular.

Here, the C concentration at the interface between the base iron 101 and the plating layer 103 is set to a desired value by controlling the conditions of decarburization annealing to be performed on the base iron 101. Such decarburization annealing is performed as necessary during the manufacture of the plated steel sheet that serves as the material.

### <Regarding the weld overlap portion 50>

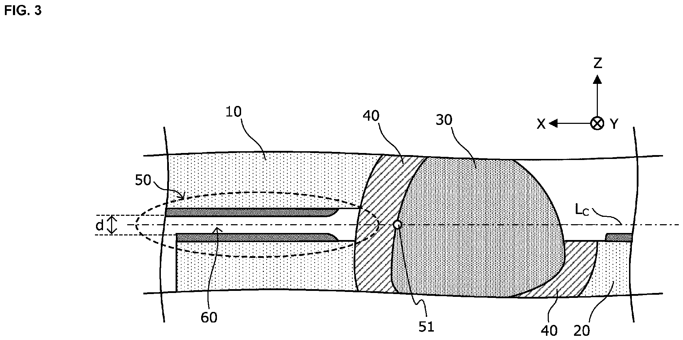

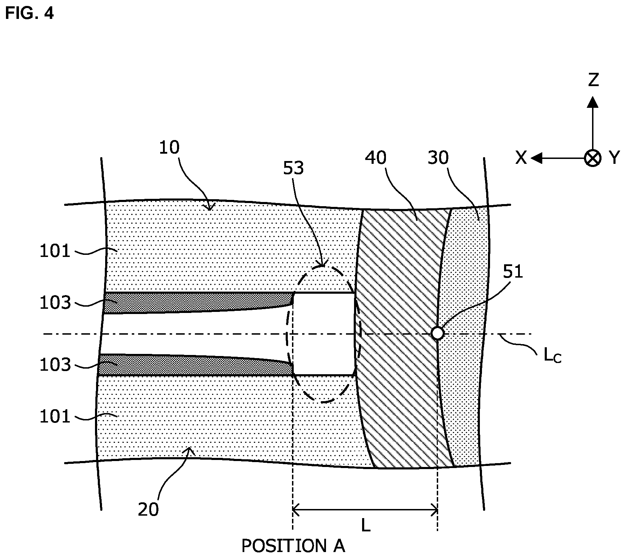

Then, there is explained in detail the weld overlap portion 50 in the welded joint 1 according to this embodiment with reference to FIG. 3 and FIG. 4. FIG. 3 and FIG. 4 each are an explanatory view for explaining the weld overlap portion 50 in the welded joint 1 according to this embodiment.

FIG. 3 schematically illustrates a cross section in the vicinity of the weld overlap portion 50 illustrated in FIG. 1 viewed from the Y-axis direction in an enlarged manner.

When the vicinity of the weld overlap portion 50 is enlarged in the welded joint 1 obtained by welding the first steel sheet 10 and the second steel sheet 20 by arc welding or laser welding, a gap 60 is present between the first steel sheet 10 and the second steel sheet 20, as schematically illustrated in FIG. 3. This gap is called a "joint gap" (sometimes called a lap joint gap). In FIG. 3, the joint gap 60 is illustrated with emphasis, and thus at first glance, it appears as if a significant-sized gap is present, but the size of the joint gap 60 (d in FIG. 3) is generally about 10 to 500 µm. As is clear also from such a size, even in the welded joint 1 where the two steel sheets appear to be in complete contact with each other with the naked eye, the joint gap 60 is present when viewed in an enlarged manner.

In the weld overlap portion 50, virtually extending the center axis of the joint gap 60 toward the weld bead zone 30 along a direction (the X-axis direction in FIG. 3) perpendicular to the extension direction of the weld bead zone 30 (the Y-axis direction in FIG. 3) is considered. In this embodiment, the virtual straight line representing the center axis of the joint gap 60 is denoted as a straight line L_{C}. In the welded joint 1 according to this embodiment, molten metal may flow into the joint gap 60, exposing the weld bead zone 30. In this case, the heat-affected zone 40 will no longer be present on the virtual straight line L_{C} representing the center axis of the joint gap 60. In light of this situation, in this embodiment, the intersection point of the virtual straight line L_{C} representing the center axis of the joint gap 60 with the end of the weld bead zone 30 is defined as a "tip of the weld overlap portion."

Incidentally, it is also possible that during arc welding or laser welding, so-called blowholes are formed depending on the type of plated steel sheet, welding conditions, or another factor. However, the blowholes are to be formed inside the weld bead zone 30, and thus with the above-described definition, the tip of the weld overlap portion can be identified regardless of whether or not blowholes occur.

Here, the position of the boundary between the heat-affected zone 40 and the weld bead zone 30 in the cross section of the actual welded joint 1 can be easily visualized by etching the cross section of the welded joint 1 including the weld bead zone 30 and the heat-affected zone 40 using an etching solution. For example, as the etching solution, it is possible to use nital (mixture: 95% ethanol, 5% sulfuric acid), an etching solution obtained by mixing 60 g of sodium dodecylbenzenesulfonate, 36 g of picric acid, 60 cc of ethanol, and 60 cc of household detergent solution in 2400 cc of water, or the like.

In the welded joint 1 according to this embodiment, as is clear also from the chemical composition of the plating layer 103 in the non-heat-affected zone, the galvanized steel sheet is used as the material steel sheet. In arc welding or laser welding, as it comes closer to the portion where welding is being performed, the amount of heat input during welding becomes greater. In the case of the welded joint 1 according to this embodiment, the plating layer 103 is a zinc-based plating having a relatively low melting point, and therefore during welding, the plating layer 103 evaporates to thereby disappear. Further, as it goes away from the portion where welding is being performed, the heat to reach during welding decreases, and thus when it goes away from the portion where welding is being performed to a certain extent, the plating layer 103 is to remain even after welding.

The present inventors examined the corrosion resistance of the weld overlap portion 50, and then found out that as long as the amount of disappearance of the plating layer 103 can be reduced by inhibiting the evaporation of this plating layer 103, the region where the plating layer 103 remains after welding increases, resulting in that the improvement in the corrosion resistance of the weld overlap portion 50 can be achieved.

In the welded joint 1 according to this embodiment, by using the plated steel sheet including the plating layer 103 having such a chemical composition as explained earlier as the material steel sheet, such evaporation of the plating layer 103 during welding as described above can be inhibited. As a result, in the welded joint 1 according to this embodiment, it becomes possible to achieve the improvement in the corrosion resistance of the weld overlap portion.

Next, there is explained how to concretize the degree of such disappearance of the plating layer 103 as described above.

In the gap 60 of the welded joint 1 according to this embodiment, the region in the X-axis direction closest to the weld bead zone 30 (the tip 51 of the weld overlap portion), where the thickness of the plating layer 103 is less than 1 µm, is referred to as a "plating disappearance portion." For example, the region surrounded by the dashed line in the schematic view illustrated in FIG. 4 corresponds to the above-described plating disappearance portion.

In the welded joint 1 according to this embodiment, the size of a plating disappearance portion 53 is defined, starting from the tip 51 of the weld overlap portion defined as above. That is, how far the plating disappearance portion 53 continues from the vicinity of the weld bead zone 30 and the heat-affected zone 40 toward a direction perpendicular to the extension direction of the weld bead zone 30 (the Y-axis direction in FIG. 4) and away from the weld bead zone 30 (the X-axis positive direction in FIG. 4) is identified. At this time, the position where a plating layer having a thickness of 1 µm or more and containing metal Zn begins to appear for the first time on the surface of the base iron 101 (a position A in FIG. 4) is set as a terminal end of the plating disappearance portion 53. Then, the distance between the terminal end of the plating disappearance portion 53 and the tip 51 of the weld overlap portion (a distance L in FIG. 4) is defined as the length of the plating disappearance portion 53. In other words, in a cross-sectional view cut in a direction perpendicular to the Y-axis direction, the distance between of ends of the plating disappearance portion 53 in the X-axis direction, the end that is farther from the weld bead zone 30 and the tip 51 of the weld overlap portion is defined as the length of the plating disappearance portion 53.

For example, in the example in FIG. 4, the end of the plating layer 103 is located at the position A, and thus, the position A in FIG. 4 is the end of the plating disappearance portion 53 that is farther from the weld bead zone 30, (which can also be regarded as the terminal end of the plating disappearance portion 53). Therefore, in the case of the example in FIG. 4, the distance between the terminal end of the plating disappearance portion 53 and the tip 51 of the weld overlap portion (the distance L in FIG. 4) is the distance corresponding to the length of the plating disappearance portion 53.

Here, FIG. 4 illustrates, as an example, the case where the position of the terminal end of the plating disappearance portion 53 on the first steel sheet 10 side coincides with the position of the terminal end of the plating disappearance portion 53 on the second steel sheet 20 side. When the position of the terminal end of the plating disappearance portion 53 on the first steel sheet 10 side differs from the position of the terminal end of the plating disappearance portion 53 on the second steel sheet 20 side, the position of the terminal end that is farther from the tip 51 of the weld overlap portion is treated as the terminal end of the plating disappearance portion 53 in the welded joint 1 to which attention is paid.

In the welded joint 1 according to this embodiment, the length L of the plating disappearance portion 53 as illustrated in FIG. 4 is 1000 µm or less. The fact that the length L of the plating disappearance portion 53 is short, which is 1000 µm or less, means that the plating layer 103 is sufficiently present in the weld overlap portion 50 of the welded joint 1 according to this embodiment. With the presence of the plating layer 103, the corrosion resistance of the weld overlap portion 50 improves in the welded joint 1 according to this embodiment. A shorter length L of the plating disappearance portion 53 as illustrated in FIG. 4 as an example is better, and it is preferably 500 µm or less, and more preferably 100 µm or less.

Here, the length L of the plating disappearance portion 53 as described above can be measured as follows.

That is, a cross section of the welded joint 1 cut perpendicular to the Y-axis direction at an arbitrary position in the extension direction of the weld bead zone 30 is etched using such an etching solution as described above to be observed with an SEM. In this case, with the acceleration voltage set to 15.0 kV, the field of view having a size of 200 µm × 180 µm is observed with a backscattered electron image. By such observation, the position of the tip 51 of the weld overlap portion 50 is identified. Then, the length of the plating disappearance portion is measured starting from the tip 51. Such observation and measurement operations are performed at any three cross sections, and the average of measured values obtained is set as the length L of the plating disappearance portion 53.

The weld overlap portion 50 of the welded joint 1 according to this embodiment has been explained in detail above with reference to FIG. 3 to FIG. 4.

Incidentally, the non-heat-affected zone of the welded joint 1 according to this embodiment may further include one or two or more layers of various coatings on the above-described plating layer 103. Examples of such coatings include a chromate coating, a phosphate coating, a chromate-free coating, an organic resin coating, and so on.

### (Regarding the manufacturing method of the plated steel sheet that serves as the material)

Next, there is explained an example of the manufacturing method of such a plated steel sheet that serves as the material for the welded joint 1 as explained above.

The plated steel sheet that serves as the material for the welded joint 1 according to this embodiment is manufactured in a manner that the base iron 101 as described above is used as a base material, strain is applied to the surface of the base iron 101 by heavy grinding, and then a plating layer is formed on the strained surface. Then, a specific heat treatment is performed on the plating layer formed on the surface of the base iron 101, to thereby manufacture the plated steel sheet that serves as the material for the welded joint 1.

Here, the surface of the base iron 101 is ground with a heavy grinding brush to apply strain to the surface, thereby making it possible to promote alloying of Fe and Al when the plated steel sheet serving as the material is subjected to welding. The alloying of Fe and Al during welding is promoted, and thereby Mg (and further Ca, depending on the chemical composition of the plating layer) are concentrated in a liquid phase present during welding, and dense Mg-Ca oxides are formed on the surface of a liquid-phase Mg-Zn metal structure. As a result, it becomes possible to inhibit evaporation of the Mg-Zn metal structure, which advantageously acts on the corrosion resistance of the base iron 101, and make the length of the plating disappearance portion 53 described above fall within such a range of this embodiment as described above.

In addition to the hot-dip plating method, a thermal spraying method, a cold spraying method, a sputtering method, a vapor deposition method, an electroplating method, and so on can be applied to the formation of the plating layer. However, in order to form a plating layer having a thickness generally used in automobiles and the like, the hot-dip plating method is most preferable in terms of cost.

Then, such a specific heat treatment step as will be explained below is performed on the obtained plated steel sheet, thereby making it possible to manufacture the plated steel sheet, which serves as the material.

There is explained in detail an example of the manufacturing method for obtaining the plated steel sheet, which serves as the material, using the hot-dip plating method below.

In the manufacturing step of such a plated steel sheet, the steel sheet, which is used as a base material, is first rolled by a Sendzimir method to a desired sheet thickness, and then is coiled and installed in a hot-dip plating line.

In the hot-dip plating line, sheet passing of the steel sheet is continuously performed while the steel sheet being uncoiled from the coil. During the sheet passing, strain is applied to the surface of the steel sheet by a heavy grinding brush provided at a predetermined position. Thereafter, by an annealing facility installed on the line, the steel sheet is heated and reduced at 700 to 900°C for greater than 0 seconds and 300 seconds or less in an atmosphere of N₂-(1 to 10)% H₂ gas with a dew point of -60 to 10°C under the environment where an oxygen concentration is 20 ppm or less and oxidation is unlikely to occur, for example, and then air-cooled with N₂ gas to around a bath temperature of a plating bath at a subsequent stage + 20°C and then immersed in the plating bath. Incidentally, in the above-described flow, strain is applied to the steel sheet before annealing, but even when at least part of the applied strain is released by annealing, it is possible to promote the alloying of Fe and Al.

Here, in the plating bath, a plating alloy in a molten state, which contains such chemical components as described above, is prepared beforehand. The bath temperature of the plating bath is set to the melting point of the plating alloy or higher (for example, about 460 to 660°C). When preparing the material for the plating alloy, pure metal (with a purity of 99% or higher) is preferably used as the alloy material for the preparation. First, a predetermined amount of alloy metal is mixed so as to obtain the composition of such a plating layer as described above, and the mixture is completely melted into an alloy using a high-frequency induction furnace, an arc furnace, or other furnaces under vacuum or in an inert gas replacement state. Further, the alloy mixed with the predetermined components (the composition of the above-described plating layer) is melted in the atmosphere, and the resulting melt is used as the plating bath.

Incidentally, there is no particular restriction on using pure metals in such preparation of the plating alloy as described above, and existing Zn alloys, Mg alloys, and Al alloys may be melted and used. In this case, there is no problem as long as a predetermined composition alloy with few impurities is used.

After the steel sheet is immersed in such a plating bath as described above, it is pulled up at a predetermined speed. At this time, the plating coating weight is controlled by N₂ wiping gas, for example, so that the plating layer formed obtains a desired thickness. As for the conditions other than the bath temperature here, general plating operating conditions only need to be applied, and no special facilities or conditions are required.

Then, such first cooling step and second cooling step as below are performed on the plating alloy in a molten state located on the steel sheet to make the plating alloy in a molten state into the plating layer 103. The first cooling step and the second cooling step are explained in detail below.

The first cooling step is a cooling step, which is performed when the temperature of the plating alloy is within a range of the bath temperature to 250°C, and the plated steel sheet within such a temperature range as described above is rapidly cooled at an average cooling rate of 10°C/second or more in an atmosphere with a dew point of -20°C or lower. This is because the temperature region of the bath temperature to 250°C is where coarse oxides are likely to be formed on the surface of the plating layer, and thus the dew point is set to -20°C or lower and the average cooling rate is set to 10°C/sec or more, thereby preventing oxidation in a high-temperature region. Incidentally, when the hot-dip plating method is employed in the plating step, such a first cooling step is performed immediately after the steel sheet is pulled up from the plating bath. This causes the plating alloy located on the surface of the steel sheet to solidify, and the plating layer is formed.

Thereafter, when the temperature of the plating alloy (plating layer) is within a range of 250 to 50°C, the second cooling step is performed. This second cooling step is a step in which the plated steel sheet within the temperature range of 250 to 50°C is slowly cooled at an average cooling rate of less than 10°C/second in an atmosphere with a dew point of 0°C or higher. In such a second cooling step, the dew point is set to 0°C or higher and the average cooling rate is set to less than 10°C/second, thereby making it possible to form dense oxide in a low-temperature region.

Incidentally, regarding switching of the average cooling rate and the dew point from the first cooling step to the second cooling step, it is preferable to provide two or more piping systems for the atmosphere gas to be sprayed for controlling the dew point, to thereby enable smooth switching. Further, in the case where it is difficult to simultaneously switch both the average cooling rate and the dew point at a temperature of 250°C, the average cooling rate may be switched at a temperature of 250°C, and at the same time, the atmosphere gas for controlling the dew point may be switched within a temperature range of 260 to 240°C.

As described above, strain is applied to the surface of the base iron 101 by a heavy grinding brush and then the plating layer is formed, and further, such a plating layer is subjected to a two-stage cooling step in which the plating layer is rapidly cooled in a temperature range of the bath temperature to 250°C and then slowly cooled in a temperature range of 250 to 50°C, thereby making it possible to fabricate the plating layer 103 in which Zn does not evaporate easily even during welding.

Here, the interval between the end of the first cooling step and the start of the second cooling step is preferably set to be within 3 seconds, and it is preferable to start the second cooling step immediately after the end of the first cooling step. When the interval between the end of the first cooling step and the start of the second cooling step exceeds 3 seconds, an unintended cooling period occurs, to fail to fabricate the plating layer 103 that falls within such a range of this embodiment as described above.

Here, in the above-described first cooling step, the lower limit value of the dew point is not defined in particular, but for example, about -90°C is a substantial lower limit. Further, the average cooling rate is more preferably 40°C/second or more. Incidentally, the upper limit value of the average cooling rate is not defined in particular, but for example, about 90°C/second is a substantial upper limit.

Further, in the above-described second cooling step, the upper limit value of the dew point is not defined in particular, but for example, about 20°C is a substantial upper limit. Further, the average cooling rate is more preferably 4°C/second or less.

Incidentally, even if strain is applied to the surface of the base iron 101 as appropriate, unless one of such first cooling step and second cooling step as described above is performed, it is not possible to fabricate the plating layer 103 that falls within such a range of this embodiment as described above. After strain is applied to the surface of the base iron 101 as appropriate, both such first cooling step and second cooling step as described above are performed, thereby making it possible to fabricate the plating layer 103 according to this embodiment.

Further, when an alloying heat treatment step (for example, a heat treatment step including heating to an attained sheet temperature of about 480 to 550°C), which is often performed in the manufacture of alloyed hot-dip galvanized steel sheets in general, is performed after the above-described second cooling step, a formation state of the plating layer controlled by the first cooling step and the second cooling step is disrupted, failing to obtain such an effect of inhibiting evaporation of Zn as focused on in this embodiment. From such a viewpoint, it is important not to perform the heat treatment step after the second cooling step.

Here, in such cooling steps as described above, a generally known method such as N₂ gas cooling can be applied. Further, as the cooling gas, other than N₂ gas, gases having a high heat removal effect, such as He gas and hydrogen gas, may be used.

Incidentally, as a method of actually measuring the temperature of the plating layer, for example, a contact-type thermocouple (K-type) may be used. By attaching the contact-type thermocouple to the base iron 101, the average temperature of the entire plating layer can be constantly monitored. Further, by mechanically controlling various speeds and thicknesses and standardizing various operating conditions such as a preheating temperature of the base iron 101 and the temperature of the plating bath, the temperature of the entire plating layer at that point under such manufacturing conditions can be monitored almost accurately. This makes it possible to precisely control the cooling processes in the first cooling step and the second cooling step. Incidentally, the surface temperature of the plating layer may also be measured by a non-contact radiation thermometer, although this is not as accurate as the contact type.

Further, the relationship between the surface temperature of the plating layer and the average temperature of the entire plating layer may be found by a simulation that performs a heat conduction analysis. Specifically, the surface temperature of the plating layer and the average temperature of the entire plating layer are found based on various manufacturing conditions, such as the preheating temperature of the base iron 101, the temperature of the plating bath, the pulling-up speed of the steel sheet from the plating bath, the sheet thickness of the base iron 101, the layer thickness of the plating layer, an amount of heat exchange between the plating layer and the manufacturing facility, and a heat release amount of the plating layer. Then, the obtained results may be used to find the relationship between the surface temperature of the plating layer and the average temperature of the entire plating layer. This makes it possible to estimate the average temperature of the entire plating layer at that time under the manufacturing conditions by actually measuring the surface temperature of the plating layer when the plated steel sheet is manufactured. As a result, the cooling processes in the first cooling step and the second cooling step can be precisely controlled.

An example of the manufacturing method of the plated steel sheet according to this embodiment has been specifically explained above.

Incidentally, in the manufacturing method of the plated steel sheet according to this embodiment, a treatment to form one or two or more layers of various coatings may further be performed after the above-described second cooling step. Examples of such a treatment include a chromate treatment, a phosphate treatment, a chromate-free treatment, an organic resin film formation treatment, and so on.

Examples of the chromate treatment include an electrolytic chromate treatment, which forms a chromate coating by electrolysis, a reactive chromate treatment, which forms a coating by using reaction with a material and then washes off excess treatment solution, a coating-type chromate treatment, which forms a coating by applying a treatment solution and drying it without water washing, and so on, and any of these chromate treatments may be used.

Examples of the electrolytic chromate treatment include the electrolytic chromate treatment using, for example, chromic acid, silica sol, resin (phosphoric acid resin, acrylic resin, vinylester resin, vinyl acetate acrylic emulsion, carboxylated styrene butadiene latex, diisopropanolamine modified epoxy resin, or the like), and hard silica.

Examples of the phosphate treatment include a zinc phosphate treatment, a calcium zinc phosphate treatment, a manganese phosphate treatment, and so on.

The chromate-free treatment is particularly suitable because it does not place a burden on the environment. Such a chromate-free treatment includes an electrolytic chromate-free treatment, which forms a chromate-free coating by electrolysis, a reactive chromate-free treatment, which forms a coating by using reaction with a material and then washes off excess treatment solution, a coating-type chromate-free treatment, which forms a coating by applying a treatment solution and drying it without water washing, and so on, and any of these chromate-free treatments may be employed.

Further, the organic resins used in the organic resin film formation treatment are not limited to specific resins, and for example, various resins such as polyester resins, polyurethane resins, epoxy resins, acrylic resins, polyolefin resins, and modified resins of these resins can be used. Here, the modified resins refer to resins obtained by making reactive functional groups contained in the structure of these resins react with other compounds (for example, monomers, crosslinking agents, or other compounds) that contain functional groups in structures, which can react with such functional groups.

One of such organic resins as described above may be used alone, or a mixture of two or more organic resins (not modified) may also be used. Further, one or two or more organic resins obtained by modifying at least one another organic resin in the presence of at least one organic resin may also be used in a mixture. Further, an organic resin that has been made aqueous by dissolving or dispersing it in water may be used. Furthermore, various coloring pigments and anti-corrosion pigments may be contained in such an organic resin film.

### (Regarding the manufacturing method of the welded joint)

The welded joint according to this embodiment is manufactured in a manner that the plated steel sheets manufactured as described above are used as the material steel sheet for the first steel sheet and the second steel sheet, for example, when manufacturing the welded joint, and then such material steel sheets are arranged so as to form a desired shape of the welded joint and welded.

Here, an arc welding method or a laser welding method can be used for welding the material steel sheets. In this case, in each of the welding methods, welding is performed under such welding conditions as will be explained below, and thereby such a state of the vicinity of the toe as described above can be achieved.

More specifically, when the welded joint is manufactured by the arc welding, for example, the material steel sheets only need to be welded under the following welding conditions.

Welding current: 250 A, welding voltage: 26.4 V, welding speed: 100 cm/min
Welding gas: 20% CO₂ + Ar, gas flow rate: 20 L/min
Welding wire: YGW16, φ 1.2 mm, manufactured by NIPPON STEEL WELDING & ENGINEERING CO., LTD
(C: 0.1 mass%, Si: 0.80 mass%, Mn: 1.5 mass%, P: 0.015 mass%, S: 0.008 mass%, Cu: 0.36 mass%)
Inclination angle of welding torch: 45°

Further, when the welded joint is manufactured by the laser welding, for example, the material steel sheets only need to be welded under the following welding conditions.

Output: 7 kW, welding speed: 400 cm/min, forward/backward angle: 0°

An example of the manufacturing method of the welded joint according to this embodiment has been explained above.

Incidentally, in the above-described embodiment, the case where the zinc-based plated steel sheet having the above-described plating layer 103 provided on the base iron 101 is used as the material steel sheet for the first steel sheet 10 and the second steel sheet 20 has been explained as an example. However, the above-described plating layer 103 only needs to be present at least on the surfaces of the first steel sheet 10 and the second steel sheet 20 that are to be overlapped with each other.

### [EXAMPLES]

Hereinafter, the welded joint according to the present invention will be specifically explained with reference to examples and comparative examples. Incidentally, the examples to be explained below are only one example of the welded joint according to the present invention, and the welded joint according to the present invention is not limited to the examples to be explained below.

In the examples and comparative examples to be explained below, hot-rolled steel sheets having tensile strengths of 590 MPa class, 780 MPa class, and 980 MPa class (all manufactured by NIPPON STEEL CORPORATION) were used as the steel sheet that serves as the base iron 101. The sheet thickness of each of the hot-rolled steel sheets was set to 3.2 mm. Using these hot-rolled steel sheets, a plurality of test pieces were prepared for the respective hot-rolled steel sheets.

The following two types of heavy grinding brushes were used for the prepared test pieces to apply strain to the surfaces of the test pieces. Incidentally, when grinding, a 1.0 to 5.0% NaOH aqueous solution was applied to the surfaces of the steel sheets beforehand. The amount of strain applied to the surface was controlled by appropriately adjusting the brush reduction amount within a range of 0.5 to 10.0 mm and appropriately adjusting the brush rotation speed within a range of 100 to 1000 rpm. Incidentally, of the two types of heavy grinding brushes to be explained below, brush type A is a brush having a stronger grinding force. Incidentally, for comparison, test pieces that were not subjected to such heavy grinding were also prepared.

Brush type A: D-100 manufactured by HOTANI Co., Ltd.
Brush type B: M-33 manufactured by HOTANI Co., Ltd.

Plating baths intended for fabricating plating layers having such compositions as listed in Table 1 below were each prepared, and each was installed in a batch-type hot-dip plating test apparatus manufactured in-house, and each of the above-described test pieces was plated. Here, the temperature of each of the test pieces was measured using a thermocouple spot-welded to the center of each of the test pieces. Further, for the test piece to be immersed in the plating bath, the surface of a plated substrate was heated and reduced at 800°C in an N₂-5% H₂ gas atmosphere in a furnace with an oxygen concentration of 20 ppm or less before immersion in the plating bath. After being heated and reduced, the test piece was air-cooled with N₂ gas and immersed in the plating bath of the hot-dip plating test apparatus for about 3 seconds after the temperature of the test piece reached the bath temperature + 20°C.

After being immersed in the plating bath, the test piece was pulled up at a pulling-up speed of 20 to 200 mm/second. At the time of pulling-up, N₂ wiping gas was used to control the plating coating weight to a desired plating coating weight. In the following examples and comparative examples, the plating coating weight was controlled so that the coating weight of the plating layer after drying per one side of the test piece was 40 to 120 g/m². After being pulled up from the plating bath, the test piece was cooled from the plating bath temperature to room temperature under the conditions listed in Table 1 below. In the following examples and comparative examples, the second cooling step was started immediately after the end of the first cooling step (that is, the interval between the end of the first cooling step and the start of the second cooling step was set to 0.2 seconds or less).

Here, from the test piece plated as described above, a steel sheet was cut into a size of 30 mm × 30 mm, this plated steel sheet was immersed in a 10% HCl aqueous solution with an inhibitor added thereto, to peel off the plating layer by pickling, and then the elements dissolved in the aqueous solution were subjected to ICP analysis, to thereby measure the composition of the plating layer.

Further, from the obtained test piece, a steel sheet cut into a size of 150 mm × 50 mm was set as the first steel sheet, and a steel sheet cut into a size of 150 mm × 30 mm was set as the second steel sheet. Long sides of these steel sheets were overlapped and welded by arc welding (lap fillet welding) to form a welded joint.

Here, welding conditions for the arc welding are as follows.

Welding current: 250 A, welding voltage: 26.4 V, welding speed: 100 cm/min
Welding gas: 20% CO₂ + Ar, gas flow rate: 20 L/min
Welding wire: YGW16, φ 1.2 mm, manufactured by NIPPON STEEL WELDING & ENGINEERING CO., LTD.
(C: 0.1 mass%, Si: 0.80 mass%, Mn: 1.5 mass%, P: 0.015 mass%, S: 0.008 mass%, Cu: 0.36 mass%)
Inclination angle of welding torch: 45°
Overlap allowance: 10 mm
Steel sheet size: Upper sheet side (first steel sheet) 150 × 50 mm, lower sheet side (second steel sheet) 150 × 30 mm
Gap between steel sheets: 0 mm

Further, welding conditions for the laser welding are as follows.
Output: 7 kW, welding speed: 400 cm/min, forward/backward angle: 0°
Steel sheet size: Upper sheet side (first steel sheet) 150 × 50 mm, lower sheet side (second steel sheet) 150 × 50 mm
Overlap allowance: 50 mm
Gap between steel sheets: 0 mm

### <GDS measurement of the C concentration in the base iron>

For the non-heat-affected zones of the welded joints obtained as described above, the concentrations of Zn, Fe, and C were measured by GDS in accordance with the method explained earlier, and the depth at which the C concentration is 0.05 mass% or less was measured.

### <Measurement of the length L of the plating disappearance portion in the weld overlap portion>

For the welded joints obtained as described above, the cross section of the weld overlap portion was observed with an SEM in accordance with the method explained earlier to measure the length L of the plating disappearance portion.

### <Evaluation of the corrosion resistance of the weld overlap portion>

Such welded joints as described above were subjected to an automotive phosphate conversion treatment (Zn phosphatization, SD5350 system: standard by Nippon Paint Industrial Coatings Co., Ltd.) and electrodeposition coating (PN110 Power Nix Gray: standard by Nippon Paint Industrial Coatings Co., Ltd.). The thickness of the electrodeposition coating was set to 20 µm in this case. Samples after the electrodeposition coating were subjected to a combined cycle corrosion test according to JASO (M609-91) to evaluate the timing at which red rust occurs in the cross section of the weld overlap portion. The evaluation criteria were as follows.

### <<Evaluation criteria>>

Grade "AAA": Timing at which red rust occurs is greater than 120 cycles
"AA": Timing at which red rust occurs is greater than 60 cycles and 120 cycles or less
"A": Timing at which red rust occurs is greater than 30 cycles and 60 cycles or less
"B": Timing at which red rust occurs is 30 cycles or less

Further, as long as such a timing at which red rust occurs as described above is greater than 30 cycles, the weld overlap portion of the test piece to which attention is paid can be evaluated as having good corrosion resistance.

The results obtained are summarized in Table 1 below.

### [Table 1]

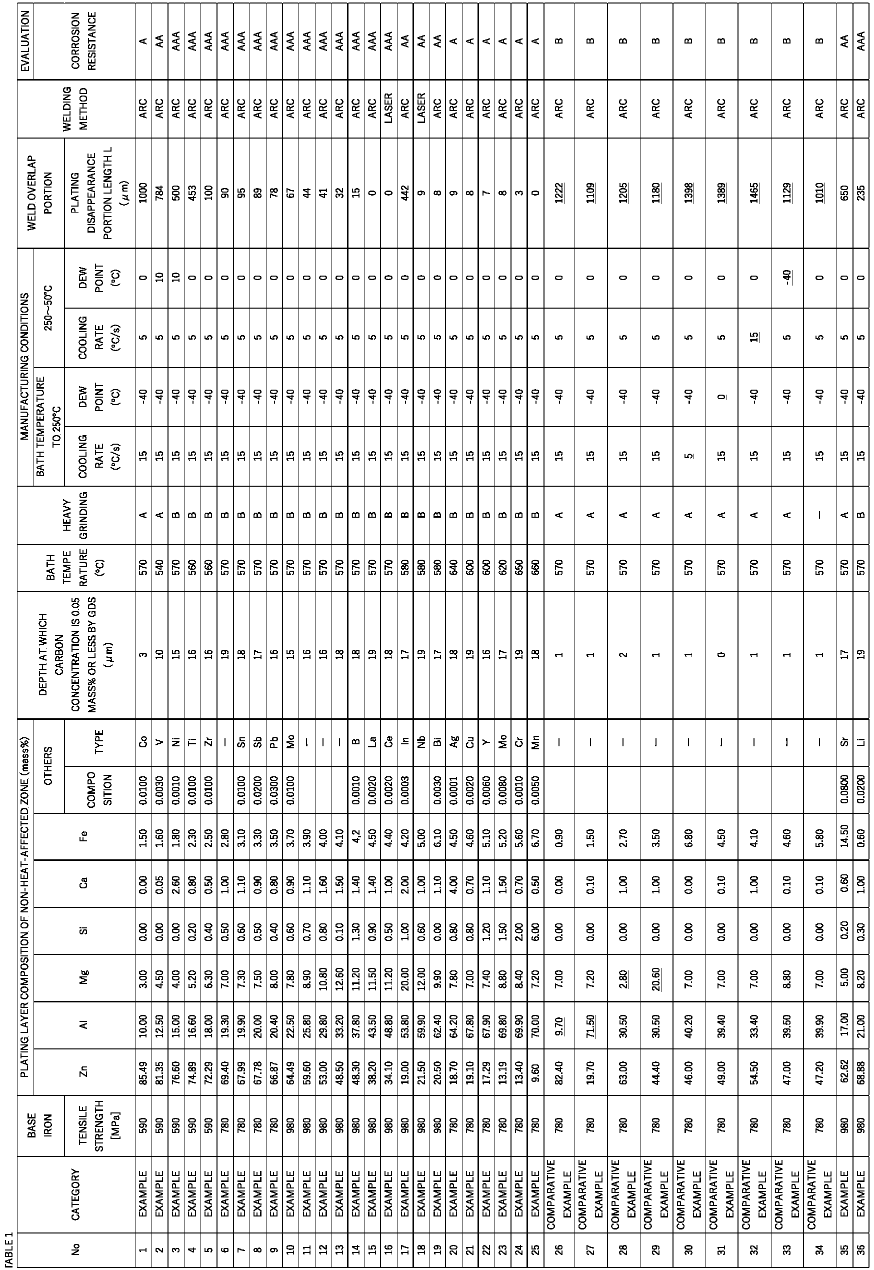

As it is clear from Table 1 above, the examples corresponding to the example of the present invention achieve excellent corrosion resistance in the weld overlap portion, whereas the examples corresponding to the comparative example of the present invention do not exhibit sufficient performance in terms of corrosion resistance in the weld overlap portion.

For example, in No. 26, in which the content of Al in the plating layer was outside the range of the present invention, the Fe-Al alloying was finished early and the alloying of the liquid-phase Mg-Zn metal structure and the base iron progressed excessively, resulting in failing to form dense Mg oxide on the surface of the liquid-phase Mg-Zn metal structure, and therefore Zn evaporated during welding and the corrosion resistance of the weld overlap portion was insufficient. In No. 27, in which the content of Al in the plating layer was outside the range of the present invention, a long time was taken for the Fe-Al alloying and therefore the alloying of the plating layer and the base iron was insufficient, resulting in failing to form dense Mg-based oxide on the surface of the liquid-phase Mg-Zn metal structure. This caused Zn to evaporate during welding, resulting in insufficient corrosion resistance of the weld overlap portion.

In No. 28, in which the content of Mg in the plating layer was outside the range of the present invention, it was not possible to form dense Mg-based oxide on the surface of the liquid-phase Mg-Zn metal structure, and thus Zn evaporated during welding and the corrosion resistance of the weld overlap portion was insufficient. In No. 29, in which the content of Mg in the plating layer was outside the range of the present invention, due to Mg being excessive, excessive Mg inhibited the Fe-Al alloying and the alloying of the plating layer and the base iron was insufficient, resulting in failing to form dense Mg-based oxide on the surface of the liquid-phase Mg-Zn metal structure. This caused Zn to evaporate during welding, resulting in insufficient corrosion resistance of the weld overlap portion.

In No. 30 in which the average cooling rate of the first cooling step was outside the range of the present invention, and in No. 31 in which the flow rate of a cooling medium in the first cooling step was outside the range of the present invention, Zn that constitutes the plating layer combusted excessively during welding, resulting in insufficient corrosion resistance.

In No. 32 in which the average cooling rate of the second cooling step was outside the range of the present invention, and in No. 33 in which the flow rate of a cooling medium in the second cooling step was outside the range of the present invention, Zn that constitutes the plating layer combusted excessively during welding, resulting in insufficient corrosion resistance.

In No. 36 in which strain application to the base iron was not performed, it was not possible to control the alloying and the η phase was formed, resulting in insufficient corrosion resistance.

Preferred embodiments of the present invention have been described above in detail with reference to the attached drawings, but the present invention is not limited to the embodiments. It should be understood that various changes and modifications are readily apparent to those skilled in the art who have the common general knowledge in the technical field to which the present invention pertains, within the scope of the technical spirit as set forth in claims, and they should also be covered by the technical scope of the present invention.

The embodiments disclosed herein are examples in all respects and not restrictive. The above embodiments may be omitted, substituted, or modified in various forms without departing from the scope of the appended claims, the configurations within the technical scope of the invention as described below, and the main idea thereof. For example, constituent elements of the above-described embodiments may be arbitrarily combined to the extent that the effects thereof are not impaired. In addition, from such arbitrary combination, the action and effect for each of the constituent elements for the combination will naturally be obtained, as well as other actions and other effects that are obvious to those skilled in the art from the description herein.

Further, the effects described herein are merely explanatory or illustrative, and are not restrictive. In other words, the technique relating to the present invention can offer other effects that are obvious to those skilled in the art from the description herein in addition to or in place of the above effects.

Note that the following configurations also belong to the technical scope of the present invention.
(1) A welded joint, includes:
   a first steel sheet and a second steel sheet that are connected to a weld bead zone with an extension direction set as a longitudinal direction in plan view, in which
   the first steel sheet and the second steel sheet each have a heat-affected zone located around the weld bead zone and a non-heat-affected zone that is not affected by heat from welding,
   in a weld overlap portion, which is a portion where a surface of the first steel sheet and a surface of the second steel sheet face each other, a joint gap, which is a gap present between the first steel sheet and the second steel sheet, is present,
   at least one surface of the first steel sheet and one surface of the second steel sheet, the one surfaces facing each other, each include a base iron and a plating layer on the base iron,
   the plating layer is a plating layer having a chemical composition containing, in mass%,
   Al: 10.00 to 70.00%,
   Mg: 3.00 to 20.00%, and
   Fe: 0.01 to 15.00%, and
   selectively containing one or two or more elements selected from the group including an element group A, an element group B, an element group C, an element group D, an element group E, an element group F, and an element group G described below, with the balance including 5.00 mass% or more of Zn and impurities,
   when the weld overlap portion is viewed from the extension direction of the weld bead zone, a center axis of the joint gap is virtually extended toward the weld bead zone along a direction perpendicular to the extension direction, and an intersection point of the center axis with an end of the weld bead zone is defined as a tip of the weld overlap portion, and
   in a cross-sectional view cut in a direction perpendicular to the extension direction, the distance between an end of a region that is closest to the weld bead zone and where the thickness of the plating layer is less than 1 µm, the end that is farther from the weld bead zone, and the tip of the weld overlap portion in a direction perpendicular to the extension direction and the direction normal to the surface of the second steel sheet is 1000 µm or less.
      [Element group A]: One or two selected from the group including Si: greater than 0% and 10.00% or less, and Ca: greater than 0% and 4.00% or less
      [Element group B]: One or two or more selected from the group including Sb: greater than 0% and 0.5000% or less, Pb: greater than 0% and 0.5000% or less, and Sr: greater than 0% and 0.5000% or less
      [Element group C]: One or two or more selected from the group including Cu: greater than 0% and 1.0000% or less, Ti: greater than 0% and 1.0000% or less, Cr: greater than 0% and 1.0000% or less, Nb: greater than 0% and 1.0000% or less, Ni: greater than 0% and 1.0000% or less, Mn: greater than 0% and 1.0000% or less, Mo: greater than 0% and 1.0000% or less, Co: greater than 0% and 1.0000% or less, and V: greater than 0% and 1.0000% or less
      [Element group D]: One or two or more selected from the group including Sn: greater than 0% and 1.0000% or less, In: greater than 0% and 1.0000% or less, and Bi: greater than 0% and 1.0000% or less
      [Element group E]: One or two or more selected from the group including Zr: greater than 0% and 1.0000% or less, Ag: greater than 0% and 1.0000% or less, and Li: greater than 0% and 1.0000% or less
      [Element group F]: One or two or more selected from the group including La: greater than 0% and 0.5000% or less, Ce: greater than 0% and 0.5000% or less, and Y: greater than 0% and 0.5000% or less
      [Element group G]: B: greater than 0% and 0.5000% or less
(2) The welded joint according to (1), in which
   the plating layer has a chemical composition containing the element group A.
(3) The welded joint according to (1), in which
   the plating layer has a chemical composition containing the element group B.
(4) The welded joint according to (1), in which
   the plating layer has a chemical composition containing the element group C.
(5) The welded joint according to (1), in which
   the plating layer has a chemical composition containing the element group D.
(6) The welded joint according to (1), in which
   the plating layer has a chemical composition containing the element group E.
(7) The welded joint according to (1), in which
   the plating layer has a chemical composition containing the element group F.
(8) The welded joint according to (1), in which
   the plating layer has a chemical composition containing the element group G.
(9) The welded joint according to any one of (1) to (8), in which
   the plating layer contains Al: 18.00 to 50.00 mass%, Mg: 6.00 to 15.00 mass%, and as the element group A, Ca: 0.05 to 4.00 mass%.
(10) The welded joint according to any one of (1) to (9), in which
   regarding a C concentration calculated based on a depth profile of the distribution of carbon by glow discharge spectrometry in the base iron of the non-heat-affected zone, the depth at which the C concentration is 0.05 mass% or less is 10 µm or more from the interface between the base iron and the plating layer.
(11) The welded joint according to any one of (1) to (10), in which
   a tensile strength of at least one of the first steel sheet and the second steel sheet is 780 MPa or more.
(12) The welded joint according to any one of (1) to (11), in which
   the distance is 500 µm or less.
(13) The welded joint according to any one of (1) to (12), in which
   the distance is 100 µm or less.

### [Explanation of Codes]

- 1: welded joint
- 10: first steel sheet
- 20: second steel sheet
- 30: weld bead zone
- 40: heat-affected zone
- 50: weld overlap portion
- 51: tip of weld overlap portion
- 60: joint gap
- 101: base iron
- 103: plating layer
- T: toe

## Claims

1. A welded joint, comprising:
a first steel sheet and a second steel sheet that are connected to a weld bead zone with an extension direction set as a longitudinal direction in plan view, wherein
the first steel sheet and the second steel sheet each have a heat-affected zone located around the weld bead zone and a non-heat-affected zone that is not affected by heat from welding,
in a weld overlap portion, which is a portion where a surface of the first steel sheet and a surface of the second steel sheet face each other, a joint gap, which is a gap present between the first steel sheet and the second steel sheet, is present,
at least one surface of the first steel sheet and one surface of the second steel sheet, the one surfaces facing each other, each include a base iron and a plating layer on the base iron,
the plating layer is a plating layer having a chemical composition containing, in mass%,
Al: 10.00 to 70.00%,
Mg: 3.00 to 20.00%, and
Fe: 0.01 to 15.00%, and
selectively containing one or two or more elements selected from the group including an element group A, an element group B, an element group C, an element group D, an element group E, an element group F, and an element group G described below, with the balance including 5.00 mass% or more of Zn and impurities,
when the weld overlap portion is viewed from the extension direction of the weld bead zone, a center axis of the joint gap is virtually extended toward the weld bead zone along a direction perpendicular to the extension direction, and an intersection point of the center axis with an end of the weld bead zone is defined as a tip of the weld overlap portion, and
in a cross-sectional view cut in a direction perpendicular to the extension direction, the distance between an end of a region that is closest to the weld bead zone and where the thickness of the plating layer is less than 1 µm, the end that is farther from the weld bead zone, and the tip of the weld overlap portion in a direction perpendicular to the extension direction and the direction normal to the surface of the second steel sheet is 1000 µm or less.
[Element group A]: One or two selected from the group including Si: greater than 0% and 10.00% or less, and Ca: greater than 0% and 4.00% or less
[Element group B]: One or two or more selected from the group includingSb: greater than 0% and 0.5000% or less, Pb: greater than 0% and 0.5000% or less, and Sr: greater than 0% and 0.5000% or less
[Element group C]: One or two or more selected from the group including Cu: greater than 0% and 1.0000% or less, Ti: greater than 0% and 1.0000% or less, Cr: greater than 0% and 1.0000% or less, Nb: greater than 0% and 1.0000% or less, Ni: greater than 0% and 1.0000% or less, Mn: greater than 0% and 1.0000% or less, Mo: greater than 0% and 1.0000% or less, Co: greater than 0% and 1.0000% or less, and V: greater than 0% and 1.0000% or less
[Element group D]: One or two or more selected from the group including Sn: greater than 0% and 1.0000% or less, In: greater than 0% and 1.0000% or less, and Bi: greater than 0% and 1.0000% or less
[Element group E]: One or two or more selected from the group including Zr: greater than 0% and 1.0000% or less, Ag: greater than 0% and 1.0000% or less, and Li: greater than 0% and 1.0000% or less
[Element group F]: One or two or more selected from the group including La: greater than 0% and 0.5000% or less, Ce: greater than 0% and 0.5000% or less, and Y: greater than 0% and 0.5000% or less
[Element group G]: B: greater than 0% and 0.5000% or less

2. The welded joint according to claim 1, wherein
the plating layer has a chemical composition containing the element group A.

3. The welded joint according to claim 1, wherein
the plating layer has a chemical composition containing the element group B.

4. The welded joint according to claim 1, wherein
the plating layer has a chemical composition containing the element group C.

5. The welded joint according to claim 1, wherein
the plating layer has a chemical composition containing the element group D.

6. The welded joint according to claim 1, wherein
the plating layer has a chemical composition containing the element group E.

7. The welded joint according to claim 1, wherein
the plating layer has a chemical composition containing the element group F.

8. The welded joint according to claim 1, wherein
the plating layer has a chemical composition containing the element group G.

9. The welded joint according to any one of claims 1 to 8, wherein
the plating layer contains Al: 18.00 to 50.00 mass%, Mg: 6.00 to 15.00 mass%, and as the element group A, Ca: 0.05 to 4.00 mass%.

10. The welded joint according to any one of claims 1 to 8, wherein regarding a C concentration calculated based on a depth profile of the distribution of carbon by glow discharge spectrometry in the base iron of the non-heat-affected zone, the depth at which the C concentration is 0.05 mass% or less is 10 µm or more from the interface between the base iron and the plating layer.

11. The welded joint according to claim 9, wherein
regarding a C concentration calculated based on a depth profile of the distribution of carbon by glow discharge spectrometry in the base iron of the non-heat-affected zone, the depth at which the C concentration is 0.05 mass% or less is 10 µm or more from the interface between the base iron and the plating layer.

12. The welded joint according to any one of claims 1 to 8, wherein
a tensile strength of at least one of the first steel sheet and the second steel sheet is 780 MPa or more.

13. The welded joint according to 9, wherein
a tensile strength of at least one of the first steel sheet and the second steel sheet is 780 MPa or more.

14. The welded joint according to 10, wherein
a tensile strength of at least one of the first steel sheet and the second steel sheet is 780 MPa or more.

15. The welded joint according to 11, wherein
a tensile strength of at least one of the first steel sheet and the second steel sheet is 780 MPa or more.

16. The welded joint according to claim 1, wherein
the distance is 500 µm or less.

17. The welded joint according to claim 1, wherein
the distance is 100 µm or less.
